# EUROPEAN PATENT APPLICATION

(11) **EP 4 506 490 A1**
(43) Date of publication of application: **12.02.2025**
(21) Application number: 24193039.5
(22) Date of filing: 06.08.2024
(51) Int. Cl.: C25B 1/04, C25B 9/19, C25B 9/23, C25B 15/08, C25B 15/00

(54) **AEM ELECTROLYSER SYSTEM AND PROCESS FOR THE PRODUCTION OF HYDROGEN BY SAID AEM ELECTROLYSER SYSTEM**

(30) Priority: 10.08.2023 IT 202300017118
(71) Applicant: Ansaldo Green Tech S.p.A., 16152 Genova (IT)
(72) Inventor: RIVA, Andrea, 16152 GENOVA (IT); DRAGONI, Mario, 16152 GENOVA (IT); DRAGONI, Matteo, 16152 GENOVA (IT)
(74) Representative: Studio Torta S.p.A.

(57) **Abstract**

The disclosure relates to an AEM electrolyser system (1) for producing pure, dry and compressed hydrogen by water electrolysis process from a water-based solution, comprising: an AEM electrolyser (2) having an anodic half-cell (10), a cathodic half-cell (11) and an anionic exchange membrane AEM (12) in between the two half-cells (10, 11); supply means (3) for feeding the water-based solution (4) only in the anodic half-cell (10), comprising a solution tank (21) and a solution inlet (22); a purge valve (35), in direct communication with the cathodic half-cell (11) and configured to selectively deviate hydrogen gas towards the hydrogen storage chamber (6) and to discharge an unreacted water-based solution from the cathodic half-cell (11) into a collecting tank (41).

## Description

### CROSS-REFERENCE TO RELATED APPLICATIONS

This patent application claims priority from Italian patent application no. 102023000017118 filed on August 10, 2023, the entire disclosure of which is incorporated herein by reference.

### TECHNICAL FIELD

The present disclosure relates to an AEM (Anion Exchange Membrane) electrolyser system and a process for the production of hydrogen by said AEM electrolyser system. Specifically, it relates to a hydrogen electrolyser system using AEM (Anion Exchange Membrane) technology and the process for the production of hydrogen by the water electrolysis process using said electrolyser system.

### STATE OF THE ART

Green hydrogen, produced with renewable electricity by water electrolysis, is one of the most promising energy carrier for replacing fossil fuels, being thus able to promote a successful energy transition and to achieve the international climate targets.

In this regard, a handful of different technologies used to produce green hydrogen have been developed over the past century.

While liquid-alkaline and proton-exchange membrane (PEM) water electrolysis are more mature technologies, anion-exchange membrane (AEM) water electrolysis offers the possibility to make use of the benefits of PEM water electrolysers, such as operation at high current densities and differential pressure, whilst keeping the advantages of alkaline electrolysis, like using non-noble catalyst instead of iridium with economical benefits.

The two half-reactions for water electrolysis in an AEM electrolyser are the following:
- oxidation reaction occurring at the anode: 4OH⁻ -> 2H₂O + 4e⁻ + O₂
- reduction reaction occurring at the cathode: 4H₂O + 4e⁻ -> 2H₂ + 4OH⁻ wherein, combining the half-reactions pair yields the overall decomposition of water into oxygen and hydrogen: 2H₂O + electrical energy -> 2H₂ + O₂

AEM electrolyser relies on the movement of hydroxide ions, OH⁻, which travel from the half-cell of the cathode to the half-cell of the anode through a membrane. Since the exchanged OH⁻ is an anion, the membrane is an anion-exchange membrane, whose acronym is AEM.

While AEM electrolyser works with a membrane and typically both electrodes are immersed in a water-based solution, namely an electrolyte solution, using a dry cathode without feed solution has proven a successful way to reduce contamination in the hydrogen product stream.

In this regard, European patent application EP2451992A1 discloses an AEM electrolyser supplied by renewable energy sources, wherein the electrolyte solution, namely a diluted alkaline solution containing just 1% KOH, is present only in the anodic half-cell and, thus, the cathode remains dry during the whole water electrolysis process.

In line with this, international patent application WO 2020/260370 discloses an AEM electrolyser, wherein the water is fed either to the anodic half-cell, leading to a dry cathode free of ionomer and/or of binder, or to the cathodic half-cell, leading to a dry anode free of ionomer and/or of binder.

An AEM electrolyser system based on a conventional AEM electrolyser, such as the one disclosed in EP2451992A1 and in WO 2020/260370, is shown schematically in Figure 1.

Despite the great capabilities and potentialities of AEM technology, the industrialization of AEM electrolyser is hindered due to some technological issues and barriers, among which the obtained hydrogen gas and, especially, the hydrogen produced during start-up and switch off of the AEM electrolyser, still contains a high content of moisture. Therefore, to render the produced hydrogen suitable for use in high-grade applications even during start-up and switch off times of the AEM electrolyser, it is necessary to provide an external dryer for the moist hydrogen, produced by the known AEM electrolysers, prior to compression, storage or other use with inevitable cost and time disadvantages.

In that context, an opportunity to develop and implement an alternative AEM electrolyser system for hydrogen production to further reduce the actual moisture of the produced hydrogen during the whole water electrolysis process exists.

### SUMMARY OF THE INVENTION

It is an object of the present disclosure to propose a new AEM electrolyser system. More specifically, the AEM electrolyser system is a new system to be used for producing hydrogen, especially green hydrogen since said system can be supplied by renewable sources. In one aspect of the present disclosure, an improvement over the known art shall be achieved. More specifically, the presently disclosed subject-matter is capable of reducing the amount of water, namely electrolyte solution, at the cathode during the whole water electrolysis process, aiming to experience a long-standing dry cathode condition with the production of a drier hydrogen gas. In another aspect of the presently disclosed subject matter, the new AEM electrolyser system leads to the production of a pressurized, purer and drier hydrogen in one single step with a reduced necessity to separate the produced hydrogen from water within an extra dehumidification/drying step and to perform a subsequent compression step with obvious advantages in time and cost savings. In still a further aspect, it is intended to provide a AEM electrolyser system which allows to re-circulate at least some water, namely electrolyte solution, with cost and environmental benefits.

It is a further object of the present disclosure to propose a process for the hydrogen production. More specifically, this process can use the disclosed AEM electrolysis system.

This is achieved by the AEM electrolyser system and the process for the production of hydrogen as claimed by the attached claims 1 and 18 respectively.

Further effects and advantages of the disclosed subject matter, whether explicitly mentioned or not, will become apparent in view of the disclosure provided below.

In brief, this disclosure relates to a AEM electrolyser system comprising supply means for feeding the water-based solution, such as the electrolyte solution, to the anode compartment only and means for water management at the cathode compartment. Surprisingly, these latter means allow, during the start-up and/or switch off times of said AEM electrolyser system, both to reduce the moisture of the produced hydrogen and to re-circulate the unreacted water-based solution collected at cathode compartment.

Here and below, unreacted water-based solution means water-based solution which does not undergo water electrolysis process, namely said unreacted water-based solution does not form hydrogen gas (H₂) via the reduction reaction occurring at the cathode, but it accumulates at the cathode side.

Indeed, differently to the known AEM electrolyser systems, the disclosed AEM electrolyser system comprises, specifically, a purge valve, linked to the cathodic half-cell, which, at least during the start-up and/or switch off times of the disclosed AEM electrolyser system, deviates the unreacted water-based solution towards a collected tank, which is downstream of the purge valve, for collecting and then recirculating the unreacted water-based solution . Thanks to said purge valve, the disclosed AEM electrolyser system allows to maintain the cathode in a drier condition in all the operating steps of the process. In parallel, the collecting tank allows to feed the anodic half-cell with re-circulated water-based solution, namely electrolyte solution, resulting in a reduced waste of water.

### BRIEF DESCRIPTION OF THE DRAWINGS

Further characteristics and advantages of the present invention will become clear from the following description, and with reference to the drawings attached, in which:
- Figure 1 shows schematically a conventional AEM electrolyser system for hydrogen production; and
- Figure 2 shows schematically an AEM electrolyser system according to the present invention.

### DESCRIPTION OF EMBODIMENTS

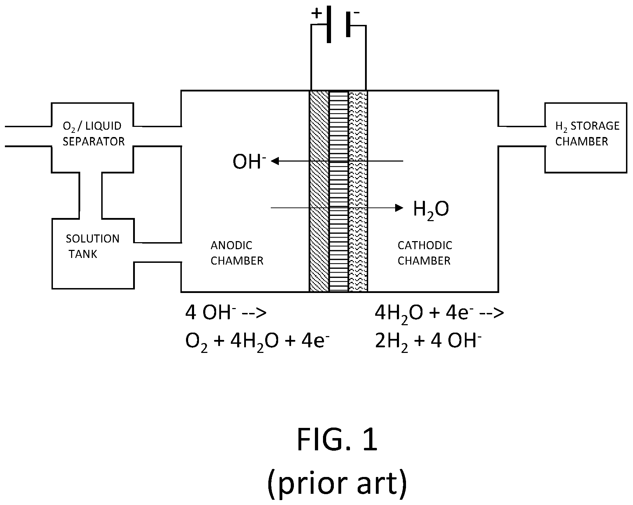

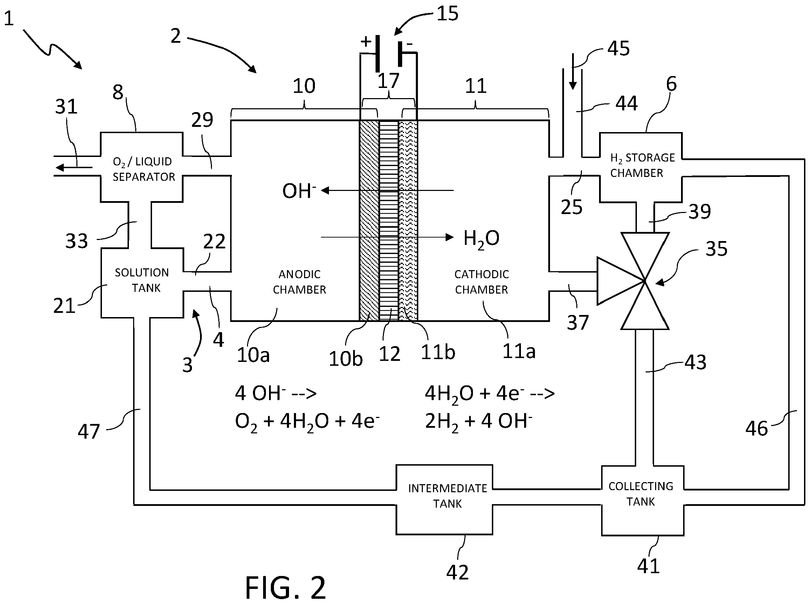

Similar to the conventional AEM electrolyser system shown in Figure 1, the AEM electrolyser system 1 according to the invention and depicted in Figure 2 comprises: at least an AEM electrolyser 2, supply means 3 for feeding a water-based solution 4, a hydrogen storage chamber 6 and an O₂/liquid separator 8. Referring to the AEM electrolyser 2, it comprises two half-cells, an anodic half-cell 10 and a cathodic half-cell 11. Each half-cell comprises an anodic chamber 10a or a cathodic chamber 11a and an electrode, namely an anode 10b or a cathode 11b, respectively.

An anionic exchange membrane (AEM) 12 is disposed between the anode 10b and the cathode 11b.

The anode 10b and cathode 11b are electrically coupled to an electric current source 15 for powering the AEM electrolyser 2 and, thus, for decomposing water-based solution into oxygen and hydrogen gas by water electrolysis process.

The AEM electrolyser system 1 of this invention may comprise a single AEM electrolyser 2, as depicted in Figure 2, or a stack of AEM electrolyser 2 (not shown in Figure 2), that have all the characteristics listed above and below. When the AEM electrolyser system 1 comprises a stack of AEM electrolyser 2, the electric current source 15 connects the ends of the stack. In detail, the AEM electrolysers 2, comprised in the stack of AEM electrolyser 2, are assembled in series from an electrical point of view and in parallel from a hydraulic point of view. Hydraulically, it means that the re-circulated water-based solution, namely electrolyte solution, feeds all the AEM electrolysers 2 in parallel.

Since the anionic exchange membrane (AEM) 12 forms a physical barrier between the two half-cells 10 and 11, the AEM electrolyser 2 is capable to operate intermittently or with strong power fluctuations and thus the electric current source 15 can also derive from renewable energy sources, which are inherently intermittent.

The anode 10b and the cathode 11b normally are made of a metal element or of some highly conducting surface onto which is applied a catalyst also usually made of a metal or metal oxide particles.

The anode 10b is usually formed by a deposition of metal oxides such as NiFeOx, IrOx, PbRuOx, LaSrCoOx, NbOx or other substances, on an electrically conductive and porous substrate (e.g. nickel foam or nickel felt).

The cathode 11b is generally formed by a deposition of metal particles (such as Platinum) mixed with a carbon support in different forms and morphologies (such as vulcan, graphite or other), all deposited on NiFelt as well as or other substrates, such as nickel foam, carbon cloth, carbon paper or similar.

The catalyst, for example, is formed from metal complexes obtained from transition metal salts, such as manganese, iron, cobalt, nickel, palladium, iridium, ruthenium or their alloys.

It is envisaged that both the anodic and cathodic electrodes may be manufactured by a variety of processes such as, but not limited to, a catalyst coated membrane (CCM), catalyst coated substrate (CCS) or direct deposition (DS).

Preferably, the anionic exchange membrane (AEM) 12 is formed of a polymeric backbone coupled with cation headgroup suitable for transporting OH⁻. For example, the polymeric backbone is selected from the group consisting of:
- aliphatic or mixed aromatic/aliphatic backbones, block copolymers of styrene and ethane and butadiene,
- aromatic monomers and aliphatic ketones,
- polybenzimidazole, and
- combinations thereof.

For example, the cationic headgroup is selected from the group consisting of:
- poly(arylene ether)-based backbones, e.g., polyphenylene oxide, poly- (arylene ether sulfone), poly(arylene ether ketone), and poly(arylene ether phosphine oxide),
- polyolefin-based backbones, e.g., polyethylene, polystyrene, polynorborene, and polytetrafluoroethylene,
- polyphenylene-based backbones,
- backbones containing cationic moieties, e.g., poly- (benzimidazole) and poly(phosphazene), and
- combinations thereof.

The ensemble of the anode 10b, the cathode 11b and anionic exchange membrane (AEM) 12 constitutes the so-called membrane-electrode assembly (MEA) 17. The MEA is generally realized by an anionic exchange membrane (AEM) on both sides of which are mechanically pressed the electrodes. Preferably, the MEA 17 comprises at least one ionomer and at least one binder to improve the property of the assembly such as conductivity, mechanical strength and thermal stability. The same compound can be used both as a ionomer and a binder.

Specifically, the addiction of binders serves to maintain the integrity of the MEA 17, whereas the ionomer helps to increase available catalyst surfaces.

For example, the ionomer is selected from the group consisting of charged polymer of aromatic, imidazolium, gudadininium groups, hexamethyl-p-terphenyl polybenzimidazolium.

In one embodiment of the invention, the binder is selected from the same group of substances and materials used as ionomers. Alternatively, the binder can be a different material such as sulfonated tetrafluoroethylene.

In the AEM electrolyser 2 the water-based solution is fed exclusively to the anodic half-cell 10. That is, water-based solution enters the anodic half-cell 10 and approaches the anode 10b, while the cathode 11b is only supplied with water-based solution via diffusion through the anionic exchange membrane (AEM) 12. Here and in the following, "water-based solution" or, simply, "water" or "solution" can be any solutions containing water molecules, in particular a solution having water as a main component (in an amount higher than 50% by weight). As it an AEM system, the solution will normally be at least slightly alkaline, more preferably mild to strong alkaline. It is envisaged that alkalinity may be achieved by any suitable compound (e.g. strong bases, buffer solutions, etc.). However, in a preferred embodiment KOH is used. Preferably the presence of KOH, or suitable alternatives such as NaOH and LiOH, is in the range of 0.1% to 30%, preferably in the range of 0.1% to 10%, more preferably 5%. Alternatively, the water-based solution can be K₂CO₃.

In details, the anodic half-cell 10 is connected with the supply means 3 for feeding the water-based solution 4, which comprise a solution tank 21 and a solution inlet 22. Specifically, the anodic chamber 10a is connected with the solution tank 21 via the solution inlet 22. From the anodic chamber 10a, water molecules reach the anode 10b and are dragged across the anionic exchange membrane (AEM) 12 via diffusion due to the concentration gradient.

Due to its hydrophilicity, the anionic exchange membrane (AEM) 12 is completely soaked in water up to the cathode 11b. During water electrolysis process, the water is consumed at the cathode 11b, evolving hydrogen gas (H₂) which leaves the cathodic chamber 11a towards the hydrogen storage chamber 6 via a first hydrogen line 25 and, in some phases of the water electrolysis process, via a second hydrogen line 39.

The OH⁻ ions, forming during the cathodic half-reaction, migrate back towards the anode 10b through the anionic exchange membrane (AEM) 12. At the cathode 11b, part of the water-based solution is also dragged to the anode 10b within the solvation shell of OH⁻ migrating across the anionic exchange membrane (AEM) 12 (electro-osmotic drag).

At the anode 10b, the OH⁻ ions are consumed by the oxygen evolution reaction. The obtained O₂ and some unreacted liquid are then discharged from the anodic chamber 10a to the O₂/liquid separator 8 via a fluid outlet 29. The O₂/liquid separator 8 is configured to separate an oxygen gas stream 31 from a liquid stream, which is optionally recycled back into the solution tank 21 via a liquid conduit 33.

Since the water-based solution is supplied only to the anodic half-cell 10 via the solution inlet 22, the AEM electrolyser system 1 operates under dry cathode condition.

With a dry cathode condition, it is acknowledged that the water molecules, which are diffused via anionic exchange membrane (AEM) 12, evolve at the cathodic half-cell 11 in different ways depending, mainly, on the operating phases of the water electrolysis process.

Specifically, the water molecules promptly lead to H₂ and OH⁻ formation at the base load regime, that is when H₂ production occurs at maximum intensity. Indeed, at the base load regime, such amount of water at the cathode 11b is appropriate for the formation of H₂ at a rate that allows mostly the water electrolysis process with a negligible amount of unreacted water.

Therefore, during this operating phase of the process, i.e. at the base load regime, the cathodic half-cell 11 remains in a substantially dry condition. It follows that the obtained H₂, which is substantially dry, is directed, via the first hydrogen line 25, towards the hydrogen storage chamber 6.

However, during start-up and switch-off transients, particularly at the switch off, of the AEM electrolyser system 1, since the anionic exchange membrane (AEM) 12 is not polarized, the water-based solution is free to percolate into the cathode 11b and, thus, an excess of water molecules are accumulated at the cathodic half-cell 11. It follows that, at the next AEM electrolyser system 1 start up, the water molecules, which have been accumulated at cathodic half-cell 11 during the previous switch off phase, renders the cathode 11b less dry, resulting in a moister H₂ production.

In this regard, according to the present invention, the AEM electrolyser system 1 comprises a purge valve 35 in direct communication with the cathodic half-cell 11 via a discharge conduit 37. The purge valve 35 aims to discharge the unreacted water-based solution that percolates through the anionic exchange membrane (AEM) 12 when AEM electrolyser system 1 is shutdown.

During the base load regime, wherein the cathodic half-cell 11 is substantially in a dry condition, the discharge conduit 37, as well as the first hydrogen line 25, carry mainly dry H₂. Therefore, in this regime, the purge valve 35 deviates the substantially dry H₂, coming from the discharge conduit 37, towards the hydrogen storage chamber 6 via a second hydrogen line 39, attached to the purge valve 35. Therefore, during the base load regime, the cathodic half-cell 11 is almost dry. This means that, during the base load regime, the hydrogen storage chamber 6 is supplied with dry H₂ coming from both the first and second hydrogen lines 25 and 39.

In this base load regime, namely when the purge valve 35 deviates the substantially dry H₂, coming from the discharge conduit 37, towards the hydrogen storage chamber 6 via the second hydrogen line 39, the purge valve 35 is in closed configuration.

However, during the start-up and/or switch off of the AEM electrolyser system 1, (corresponding with the start-up and/or switch off operating phases of the water electrolysis process), the discharge conduit 37 carries unreacted water-based solution. Therefore, the purge valve 35 deviates the unreacted water-based solution, coming from the discharge conduit 37, towards a collecting tank 41 via a solution discharge conduit 43, attached to the purge valve 35, for example, on the opposite side with respect to the second hydrogen line 39.

When the purge valve 35 deviates the unreacted water-based solution, coming from the discharge conduit 37, towards the collecting tank 41 via the solution discharge conduit 43, the purge valve 35 is in open configuration. Advantageously, the purge valve 35 is a three-way valve having three ports connected to the discharge conduit 37, the second hydrogen line 39 and the solution discharge conduit 43 respectively.

The purge valve 35 is configured to selectively connect the discharge conduit 37 (and thus the cathodic half-cell 11) either to the second hydrogen line 39 (and thus to the hydrogen storage chamber 6), so as to deviate the substantially dry H₂, coming from the discharge conduit 37, towards the hydrogen storage chamber 6 via the second hydrogen line 39); or to the solution discharge conduit 43 (and thus to the collecting tank 41), so as to deviate the unreacted water-based solution (coming from the cathodic half-cell 11 through the discharge conduit 37) in the solution discharge conduit 43 (and thus in the collecting tank 41).

In the above mentioned closed configuration (assumed by the purge valve 35 during base load regime), the port of the purge valve 35 communicating with the solution discharge conduit 43 is closed, while the port communicating with the second hydrogen line 39 is open. In the open configuration (assumed in transient conditions, such as start-up and switch-off), the port of the purge valve 35 communicating with the solution discharge conduit 43 is open, while the port communicating with the second hydrogen line 39 is closed.

The invention thus allows the unreacted water-based solution formed in the cathodic half-cell 11, in particular in transient conditions, to be removed from the cathodic half-cell 11 and made available for any further use, either in the same AEM electrolyser system 1 or in any other way.

For example, as shown in the non limiting embodiment of Figure 2 (but not necessarily), the collecting tank 41 is connected to the solution tank 21 via a recycling circuit 47 so that the unreacted water-based solution removed from the cathodic half cell 11 via the purge valve 35 is then recycled to the anodic half-cell 10 via the solution inlet 22.

Optionally, an intermediate tank 42 is located along the recycling circuit 47, namely in-between the collecting tank 41 and the solution tank 21.

The collecting tank 41 and/or the intermediate tank 42 can be configured to also separate hydrogen gas, which is produced at the cathodic half-cell 11, from the unreacted water-based solution.

In particular, the intermediate tank 42 acts as a H₂/water-based solution separator and serves a safety function by preventing that H₂ enters the anodic half-cell 10, which would, otherwise, pose safety risk. Therefore, thanks to the intermediate tank 42, it is possible to recycle towards the anodic side only the water-based solution, whereas the H₂ remains in the cathode side.

It remains in any case intended that separation between hydrogen gas and unreacted water-based solution can be performed, if needed, in other ways.

In the embodiment described above, the AEM electrolyser system 1 allows to recycle unreacted water-based solution, which is present in the cathodic half-cell 11 at least during the start-up phase and/or switch off of the AEM electrolyser system 1. It follows that the water-based solution, fed in the anodic half-cell 10 via the solution inlet 22, comprises recycled water-based solution coming from the cathodic half-cell 11, when the purge valve 35 is opened, i.e. when the purge valve 35 deviates the unreacted water-based solution, carried by the discharge conduit 37, towards the solution discharge conduit 43.

It is envisaged that, whenever necessary, a phase of inertisation is performed providing nitrogen to the cathodic half-cell 11. Advantageously, the inertisation phase with nitrogen helps to clean the cathode 11 and its attached conduits, lines, chamber and tank, as well as to remove the remaining H₂.

Specifically, a nitrogen stream 45, conveyed through a nitrogen conduit 44, is fed into the first hydrogen line 25. It follows that during the inertisation phase, the nitrogen stream 45 enters and fills the cathodic half-cell 11 via the first hydrogen line 25. Cleaned up the cathodic half-cell 11, the nitrogen stream 45 reaches the collecting tank 41 by flowing into the discharge conduit 37 and, through the purge valve 35, into the subsequent solution discharge conduit 43.

Preferably, the nitrogen stream 45 comes back to the first hydrogen line 25 and thus, to the cathodic half-cell 11, by means of a recirculating nitrogen circuit 46, which connects the collecting tank 41 with the hydrogen storage chamber 6, and thus with the first hydrogen line 25.

The operation of the AEM electrolyser system 1, according to the process for the production of hydrogen of the present invention, is as follows.

The water-based solution, contained in the solution tank 21, is introduced into the anodic half-cell 10 only, such that the cathodic half-cell 11 is not directly supplied by water. In fact, the cathodic half-cell 11 is not connected to the solution tank 21. Once reached the anode 10b, the water molecules diffuse across the anionic exchange membrane (AEM) 12 up to the cathode 11b. The diffused water molecules undergo the water electrolysis process to form hydrogen (H₂) in the cathodic half-cell 11 and oxygen gas (O₂) in the anodic half-cell 10. Specifically, the diffused water molecules are consumed by the hydrogen evolution reaction at the cathode 11b, resulting in H₂ and OH⁻ products. The H₂ is stored at the hydrogen storage chamber 6 via the first hydrogen line 25. Moreover, at the base load regime, the hydrogen storage chamber 6 is also supplied by the hydrogen coming from the second hydrogen line 39, when the purge valve 35 deviates the almost dry hydrogen, carried by the discharge conduit 37, towards the second hydrogen line 39, i.e. when the purge valve is in closed configuration.

The hydroxide ions, OH⁻, produced by cathodic half-reaction, migrate back through the anionic exchange membrane (AEM) 12 towards the anode 10b. Afterwards, when OH⁻ are transported back to the anode 10b, they are consumed by the oxygen evolution reaction, resulting in O₂ and H₂O products. The oxygen gas and the excess liquid, comprising water, are then discharged from the anodic half-cell 10 to the O₂/liquid separator 8 via the fluid outlet 29 for separation into the oxygen gas stream 31 and a water-based solution stream, which is, optionally, recycled back into the solution tank 21 via the liquid conduit 33.

At the cathodic half-cell 11, the unreacted water-based solution, which does not undergo to the water electrolysis process, is purged from the cathodic chamber 11a via the purge valve 35. Namely, the purge valve 35 deviates the unreacted water-based solution, carried by the discharge conduit 37, towards the solution discharge conduit 43, during the start-up and/or switch off of the water electrolysis process.

Then, the unreacted water-based solution subsequently flows via the recycling circuit 47 into the collecting tank 41, into the intermediate tank 42, into the solution tank 21 and, thus, it is re-introduced into the anodic half-cell 10 via the solution inlet 22.

In other embodiments, the unreacted water-based solution recovered from the cathodic half-cell 11 is available for other uses.

In some embodiments, the process may include the inertisation phase: the nitrogen stream 45, flowing in the nitrogen conduit 44, cleans up the cathodic half-cell 11 by entering it via the first hydrogen line 25, which is in direct connection with the nitrogen conduit 44.

Preferably, the AEM electrolyser 2 works at the temperature at least of 60°C. Preferably, the applied current density is at least of 1 A/cm².

From the above disclosure it is clear that the AEM electrolyser system 1, as well as the process for the production of hydrogen using said system, according to the present invention result in multiple advantages:
- the produced hydrogen is drier than the one produced by the known systems during the whole operating steps of the water electrolysis process and, especially, during the start-up and/or switch off phases;
- high purity of the produced hydrogen, with a remarkable reduction of oxygen and contaminations;
- high safety level since only water-based solution is recycled from the cathodic half-cell towards the anodic half-cell, while H₂ remains in the cathodic side;
- the ability to store hydrogen at high pressures without further compression;
- the ability to operate the system with renewable electricity, which is inherently intermittent, and
- the possibility to re-cycle water-based solution.

All the aims of the present disclosure are therefore fulfilled.

The hydrogen produced by the AEM electrolyser system 1, according to the present invention, can thus be used for all the applications requiring a high purity and dry product, such as, but not limited to, fuel cells, internal combustion engines, use in hydrogenation reactions of food, drug and not only, use in metallurgical applications, use in chemical analysis techniques such as gas chromatography, etc.

## Claims

1. AEM electrolyser system (1) for the production of hydrogen by water electrolysis process from a water-based solution (4), comprising:
- a least an AEM electrolyser (2) having an anodic half-cell (10), which comprises an anode (10b); a cathodic half-cell (11), which comprises a cathode (11b); and an anion exchange membrane AEM (12), disposed between the anode (10b) and the cathode (11b);
- supply means (3) for feeding the water-based solution (4) only in the anodic half-cell (10) and comprising a solution tank (21), which contains the water-based solution (4), and a solution inlet (22), which connects the solution tank (21) with the anodic half-cell (10);
- an hydrogen storage chamber (6) in direct communication with the cathodic half-cell (11);
**characterized by** comprising
- a purge valve (35), in direct communication with the cathodic half-cell (11) via a discharge conduit (37) and configured to selectively deviate hydrogen gas towards the hydrogen storage chamber (6) and to discharge an unreacted water-based solution from the cathodic half-cell (11) into a collecting tank (41).

2. The AEM electrolyser system (1) as claimed in claim 1, wherein the purge valve (35) is a three-way valve having three ports connected to the cathodic half-cell (11) via the discharge conduit (37), to the hydrogen storage chamber (6) via a second hydrogen line (39), and to the collecting tank (41) via a solution discharge conduit (43) respectively.

3. The AEM electrolyser system (1) as claimed in claim 2, wherein the collecting tank (41) is connected to the purge valve (35) via the solution discharge conduit (43), and to the solution tank (21) via a recycling circuit (47), so that the unreacted water-based solution collected from the cathodic half-cell (11) through the purge valve (35) is re-circulated in the solution tank (21).

4. The AEM electrolyser system (1) as claimed in claim 3, wherein said collecting tank (41), and /or an intermediate tank (42) positioned along the recycling circuit (47), are configured to separate hydrogen gas from the unreacted water-based solution.

5. The AEM electrolyser system (1) as claimed in any one of the previous claims, wherein the anode (10b), the cathode (11b) and the anion exchange membrane AEM (12) form a membrane-electrode assembly MEA (17).

6. The AEM electrolyser system (1) as claimed in claim 5, wherein the membrane-electrode assembly MEA (17) comprises at least an ionomer and at least a binder, and the ionomer and the binder are either different compounds or are defined by the same compound.

7. The AEM electrolyser system (1) as claimed in claim 6, wherein the ionomer is selected from the group consisting of charged polymer of aromatic, imidazolium, gudadininium groups, hexamethyl-p-terphenyl polybenzimidazolium.

8. The AEM electrolyser system (1) as claimed in claim 6 or 7, wherein the binder is selected from the same group of substances and materials used as ionomers or can be a different material such as sulfonated tetrafluoroethylene.

9. The AEM electrolyser system (1) as claimed in any one of the previous claims, wherein the water-based solution is an alkaline solution selected from the group consisting of KOH, NaOH, LiOH, K₂Co₃ and combinations thereof and ranging from 0.1% to 30%.

10. The AEM electrolyser system (1) as claimed in any one of the previous claims, wherein the anion exchange membrane AEM (12) comprises a polymeric backbone and cationic headgroup.

11. The AEM electrolyser system (1) as claimed in claim 10, wherein the polymeric backbone is selected from the group consisting of:
- aliphatic or mixed aromatic/aliphatic backbones, block copolymers of styrene and ethane and butadiene,
- aromatic monomers and aliphatic ketones,
- polybenzimidazole and
- combinations thereof.

12. The AEM electrolyser system (1) as claimed in claim 10 or 11, wherein the cationic headgroup is selected from the group consisting of:
- poly(arylene ether)-based backbones, such as polyphenylene oxide, poly- (arylene ether sulfone), poly(arylene ether ketone), and poly(arylene ether phosphine oxide),
- polyolefin-based backbones, such as polyethylene, polystyrene, polynorborene, and polytetrafluoroethylene,
- polyphenylene-based backbones, and backbones containing cationic moieties, such as poly- (benzimidazole) and poly(phosphazene), and
- combinations thereof.

13. The AEM electrolyser system (1) as claimed in any one of the previous claims, wherein the anode (10b) and the cathode (11b) are made of a metal element or have an highly conducting surface onto which a catalyst is applied, which is also made of a metal or metal oxide particles.

14. The AEM electrolyser system (1) as claimed in claim 13, wherein the anode (10b) is made of an electrically conductive and porous substrate, such as nickel foam or nickel felt, and a layer, which is deposited on top of the substrate and made of metal oxides, such as NiFeOx, IrOx, PbRuOx, LaSrCoOx, NbOx or other substances.

15. The AEM electrolyser system (1) as claimed in claim 13 or 14, wherein the cathode (11b) is made of a substrate such as nickel felt, nickel foam carbon cloth, carbon paper or similar, and a layer, which is deposited on top of the substrate and made of metal particles, such as Platinum, mixed with a carbon support in different forms and morphologies, such as vulcan, graphite or other.

16. The AEM electrolyser system (1) as claimed in any one of the previous claims, comprising an O₂/liquid separator (8), in direct communication with the anodic half-cell (10) via a fluid outlet (29) and configured to separate an oxygen gas stream (31) from a liquid stream, which is recycled back into the solution tank (21) via a liquid conduit (33).

17. The AEM electrolyser system (1) as claimed in any one of the preceding claims, comprising a nitrogen conduit (44) in direct communication with a first hydrogen line (25), which connects the cathodic half-cell (11) with the hydrogen storage chamber (6), for circulating a nitrogen stream (45) into the cathodic half-cell (11) via the first hydrogen line (25), as well as inside the collecting tank (41) via the discharge conduit (37) and the solution discharge conduit (43), and inside the hydrogen storage chamber (6) via a recirculating nitrogen circuit (46), which is connected to the collecting tank (41).

18. A process for the production of hydrogen comprising the steps of:
- providing a AEM electrolyser system (1) comprising at least one AEM electrolyser (2) having an anodic half-cell (10), which comprises an anode (10b); a cathodic half-cell (11), which comprises a cathode (11b); and an anion exchange membrane AEM (12), disposed between and in contact with the anode (10b) and the cathode (11b);
- introducing a water-based solution only into the anodic half-cell (10);
- dragging said water-based solution across the anion exchange membrane AEM (12) via diffusion from the anode (10b) to the cathodic half-cell (11);
- producing hydrogen gas at the cathode (11b) and oxygen gas at the anode (10b) when said dragged water-based solution undergoes water electrolysis process;
- storing the hydrogen gas in a hydrogen storage chamber (6);
**characterized by** comprising the step of:
- discharging unreacted water-based solution, which has not undergone the water electrolysis process, from the cathodic half-cell (11) to a collecting tank (41) by means of a purge valve (35), the purge valve (35) being in direct communication with the cathodic half-cell (11) via a discharge conduit (37) and being configured to selectively deviate the hydrogen gas towards the hydrogen storage chamber (6) and to discharge an unreacted water-based solution from the cathodic half-cell (11) into the collecting tank (41).

19. The process as claimed in claim 18, comprising the step of re-introducing the unreacted water-based solution collected from the cathodic half-cell (11) through the purge valve (35) into the anodic half-cell (10).

20. The process as claimed in claim 18 or 19, comprising a step of separating hydrogen gas from the unreacted water-based solution.

21. The process as claimed in any one of claims 18 to 20, comprising a step of inerting with a nitrogen stream (45) the cathodic half-cell (11) during the start-up and/or switch off of said AEM electrolyser system (1).

22. The process as claimed in any one of claims 18 to 21, wherein the hydrogen storage chamber (6) is filled with hydrogen gas coming from the cathodic half-cell (11) via a first hydrogen line (25) and, at the base load regime of the water electrolysis process, also via a second hydrogen line (39) attached to the purge valve (35).

23. Use of the hydrogen produced by the process according to any one of claims 18 to 22 and/or by the AEM electrolyser system (1) according to any one of claims 1 to 17 for high-grade applications requiring pure, dry and compressed hydrogen, such as in fuel cells, internal combustion engines, metallurgical applications, hydrogenation reactions such as of food and drug and not only, and for chemical analysis techniques such as gas chromatography.
